# EUROPEAN PATENT SPECIFICATION

(11) **EP 1 532 902 B1**
(45) Date of publication and mention of the grant of the patent: **24.03.2010**
(21) Application number: 03732191.6
(22) Date of filing: 27.05.2003
(51) Int. Cl.: A47J 27/00, G05D 23/00, F24C 5/16

(54) **AUTOMATIC FOOD COOKING APPARATUS**
AUTOMATISCHES KOCHGERÄT FÜR LEBENSMITTEL
APPAREIL DE CUISSON AUTOMATIQUE D'ALIMENTS

(30) Priority: 31.05.2002 CN 02115320
(43) Date of publication of application: 25.05.2005
(73) Proprietor: Liu, Xiaoyong, Shenzhen, Guangdong 518040 (CN)
(72) Inventor: Liu, Xiaoyong, Shenzhen, Guangdong 518040 (CN)
(74) Representative: Richardt, Markus Albert
(86) International application number: PCT/CN2003/000400
(87) International publication number: WO 2003/101262

(56) References cited:
- CN-A- 1 081 866
- CN-A- 1 314 124
- CN-A- 1 364 436
- CN-Y- 2 448 232
- CN-Y- 2 493 122
- US-A- 4 503 502
- US-A- 5 050 490
- US-A- 5 525 781
- US-A- 5 881 632

## Description

### FIELD OF THE INVENTION

The present invention relates to an automatic cooking machine, and more specifically, to an automatic cooking machine which is able to accurately control the duration and degree of cooking and to carry out various major cooking techniques, especially the cooking techniques required by preparing Chinese dishes.

### BACKGROUND OF THE INVENTION

Cooking is to heat up the cooked materials to the expected duration and degree so as to realize desired tastes and flavors such as fragrant, crispy and tender by performing some major cooking techniques such as stirring frying, quick frying, frying, deep frying, braising, steaming, wet quick frying and boiling, etc.

Food is a key part of human life. Chinese cuisine is getting more and more popular among people of different cultural backgrounds or from different countries. But Chinese meal preparing is a complicated technique that can not be mastered by everyone. Preferably, meal preparing is an arduous procedure which requires much energy, labor and time. If an automatic cooking machine is provided for Chinese dishes cooking, people will be able to enjoy delicious food resembling that prepared by professional chefs even at home, and the living quality of human being will be considerably improved.

So far, there is not any automatic cooking machine introduced in the market in real sense, especially those full-automatic cooking machines for cooking Chinese dishes. An automatic cooking machine is expected to completely and automatically carry out various major cooking techniques, typically, Chinese cooking techniques, to prepare desired food with stable quality.

Such an automatic cooking machine should solve two key problems. That is how to control the duration and degree of cooking automatically and how to perform basic cooking operation to get the same or similar effect by the manual operation of a chef.

Firstly, the duration and degree of cooking is one of the key factors of cooking. For the same raw material and supplementary material, appropriate duration and degree of cooking plays a decisive role for cooking dishes and other foodstuffs. Inappropriate duration and degree of cooking will result in overcooking or undercooking. The duration and degree of cooking is also a key condition to realize different cooking techniques and to prepare dishes in different flavors. If the duration and degree of cooking is inappropriate, characteristics of those different techniques and styles may be lose. Controlling the duration and degree of cooking is the most important skill and also the most difficult skill for a chef to master. It also remains the most important standard to evaluate a chef as well as an automatic cooking machine. Therefore, to realize full-automatic cooking, the first problem to be solved is how to control the duration and degree of cooking automatically.

To solve the problem of controlling the duration and degree of cooking in an automatic cooking process is essentially to solve the following problems:
a. How to automatically and precisely detect the status and/or the changes of the duration and degree of cooking in a dynamic manner? By definition, the duration and degree of cooking refers to physical and chemical status of the cooked materials, the heat transfer media and other materials involved in cooking at a certain time during a cooking process.
b. How to control the duration and degree of cooked materials through automatic control of heating intensity, heating mode and other cooking conditions according to the detected data of the duration and degree of cooking?
C. How to automatically put into raw material, supplementary materials and semi products and how to turn over and take out the cooked materials which are ready for serving at a proper time as determined by cooking techniques and type of materials employed?

Secondly, besides controlling the duration and degree of cooking, another key issue in performing automatic cooking techniques in a machine is how to perform or imitate basic cooking operations required by different cooking techniques and different types of materials employed. For example, how to automatically feed different materials in a proper order, how to turn over the cooked materials with basic turning methods similar to the actions of a chef such as turning and stirring, small turnover, large turnover and scattering, and how to automatically take out and put into again the cooked materials, etc.

To solve the problems enumerated above, a thermal sensor disposed at the bottom or on the external wall of the cooking pan has been proposed to detect the duration and degree of cooking in Chinese Patent ZL99224470.6. However, the temperature of the cooked materials and the heat transfer media in the pan is different from that of the external wall of the pan due to thermal resistance, differences of thermal conductivity of different substances and lag of heat transfer process. Thermal sensors on the external wall of the pan can only be used to detect the temperature of the external wall of the pan. They could not precisely and timely detect the temperature of the cooked materials in the pan because the relationship between the temperature of the external wall and the temperature of the cooked material is rather complicate and may not be linear. That means the duration and degree of cooking can not be detected precisely and timely by such kind of thermal sensors. A typical instance is the situation of a steaming process. In a steaming process of foodstuff, the temperature of foodstuff in a pan is far different from that of the external wall of the pan. Actually, the object of heating control is to control the temperature of foodstuff in a pan rather than that of the external wall of the pan. The only way to precisely and timely control the duration and degree of cooking is to detect the temperature of cooked materials in a pan directly and precisely.

Chinese Patent Application 98109182.2 also disclosed a thermal sensor for automatic control of heating. However, it does not disclose the installation position and method of the sensor. Preferably, the control mode disclosed in this patent application is to drive a gas stove (gas range) to move towards or away from a pan. Such a control mode has at least two disadvantages. One is that the temperature of the body of a pan is not equal to that of cooked materials in the pan and thus the duration and degree of cooking of cooked materials can't be controlled only through controlling temperature of the body of the pan. Another disadvantage is that the installation position is not clear. Only by laying out thermal sensors at the proper positions can the duration and degree of cooking be precisely and effectively controlled.

US-A- 4,503,502 discloses a method and apparatus for cooking Chinese stir-fry food, including means for entering and storing recipe data in a computer control system, means for selecting a recipe from a menu, and means for cooking the selected recipe automatically by the computer control system including addition of food and liquid ingredients at proper intervals, temperature control throughout the cooking process, stirring of the cooking food, and timing of the cooking process, according to the recipe selected.

US-A-5,881,632 discloses a computerized cooker which sequentially enters numerous food items into various cooking pots and introduces liquid ingredients as well. Food is cooked in accordance with a specified computer program whereby gas burners for the cooking flame are controlled to achieve various levels of heat for cooking.

A chef can control heating intensity by manually adjusting the button on a gas stove to control gas flux. Automatic adjustment must be performed in an automatic cooking process. Chinese Patent ZL98232677.7 disclosed such a manner that two gas channels, which are parallel with each other, could be disposed between the gas firing port and the gas inlet at a hearth. In one of the channels a plug controlled by electromagnet attracting circuit is installed. The plug will block this channel when the electromagnet is powered to reduce the gas flux. This method can only get a two-stage adjustment of heating intensity, and no continuous or multi-stage adjustment can be accomplished. Obviously, it can't meet various heating requirements needed by different main cooking techniques.

The essential of cooking is to heat up the cooked materials to a desired duration and degree of cooking through different cooking techniques. Therefore, the object of the control system of an automatic cooking machine should be the duration and degree of cooking of cooked materials. In accordance with Chinese Patent 98232677.7 above, a photoelectric control card is adopted to control the working motor of a feeder and the working motor of a frying pan, in which the feeder is driven to open a material package and put the materials into the pan according to the time sequence of a cooking process, and in which the pan is driven to rotate around the axis of the pan surface with uniform velocity so as to ensure thorough stirring and uniform heating of the cooked materials. In accordance with Chinese Patent Application 98109123.7, switches of the electromagnetic clutches, electromagnetic valves, electric cookers, motors and main power are connected to a programmable controller, using keys in this controller to control the entire cooking process. The radical defect of all these control modes is the lack of effective measures to detect the duration and degree of cooking of cooked materials and to control heating intensity. The operating mode and timing of the feeding and stirring mechanisms are performed according to given time sequence without considering the duration and degree of cooking. Obviously, this kind of control system can't meet the requirements of correctly controlling the duration and degree of cooking of cooked materials in different cooking techniques.

Chinese Patent 98232677.7 above disclosed an automatic feeder and a pouch used thereof containing materials. According to this patent, two sealing strips of the pouch are clamped into two slots on two gear slide rods and rolled. As the feeder inclines forward, the two gear slide rods make synchronous contra-rotation, pulling the two strips outwards to open series bags of the pouch. The materials in the bags are thus released into the leaning pan. Such kind of feeder is designed to match this patented leaning pan. The materials are released slantways. Since the leaning angle is limited, the feeder cannot be placed horizontally, and thus the materials cannot be released vertically. If used in conjunction with a conventional horizontally placed pan, the feeding effect will be impaired. Because the feeding position of this feeder is fixed, materials cannot be released at the most proper position and distance required by the cooking techniques. Preferably, since the feeder is inclined forward, the release of materials will generate an impact force, which may cause the hot oil or soup in a pan to splash. Because various materials in different sections of the series bags have different volume, the required torn length of different sections should be different in order to thraw different materials. But how to control the torn length has not been indicated in this patent. Additionally, this kind of feeder has other disadvantages, for example, the opening device is too complicated: there are two pulling devices to tear the two sealing strips.

The above patent 98232677.7 also disclosed a method for turning over the cooked materials. A plurality of radial ribs are set up in the inner wall of a leaning pan and the leaning pan is driven to rotate by a motor. In this turnover method, the pan must be rotated; the mode is too simple to turn over well the cooked materials, especially the large flat pieces, such as fish. Therefore, this turnover method is far different from the ideal turnover modes required by main cooking techniques. Additionally, the ribs in the pan may bring about some disadvantages for cooking large flat pieces and cleansing the pan. The above patent application 98109123.7 disclosed a solution to turn over cooked materials, in which a pan turner keeping close to the inner wall of a pan can rotate around an axis of the pan. This turnover method is also too simple to turn over cooked materials well and far different from the ideal turnover modes required by main cooking techniques. These two modes obviously can't perform material turnover required by various cooking techniques, say nothing of taking-out one or more kinds of cooked materials and then put them in a pan again.

As described above, the essential object of cooking is to heat cooked materials to expected duration and degree through different main cooking techniques to get desired taste and flavor. The above devices in the prior art can't control or control well the duration and degree of cooking, and can't perform or perform well the basic cooking operations such as auto feeding, turnover, and taking-out according to requirements of different cooking techniques. They are still far from the most essential requirements for an automatic cooking machine, say nothing of the requirements to automatically perform the cooking techniques and get the desired taste and flavor. They could not put into practical use and there is actually no automatic cooking machine for Chinese dishes at present.

Therefore, how to automatically cook the dishes and other food, especially Chinese dishes, remains an important subject to be solved.

### Description of the Invention

One of the objects of the present invention is to provide a kind of automatic cooking machine which can automatically and correctly control the duration and degree of cooking in cooking and perform basic cooking operations such as feeding, turning over and taking out the cooked materials with the proper modes at the proper duration and degree of cooking required by cooking techniques, and which can automatically carry out the whole process of cooking and realize various basic cooking techniques, especially basic Chinese cooking techniques. This kind of automatic cooking machine can cook dishes and other food with stable quality and desired taste and flavor.

The above object of the present invention can be achieved through the automatic cooking machine according to claim 1.

Preferred embodiments of the invention are disclosed in the dependent claims.

More specifically, the following several systems are the key components of an automatic cooking machine in the present invention.

### 1. Sensor System

Temperature is the most important physical variable of cooked materials. Detecting the temperature of cooked materials and its variation has decisive significance for controlling the duration and degree of cooking. Both non-contacting thermal sensor, such as infrared thermal sensor, and contacting thermal sensor, such as thermocouple and thermal resistance are adopted in practice. Additionally, because a chef always judges the duration and degree of cooking in the process of cooking according to color, smell, smoke, etc of cooked materials. Therefore, beside the above thermal sensors, sensors to detect color, smell, smoke and other physical variables can be installed for judging and controlling the duration and degree of cooking, such as color sensor, electronic nose, smoke sensor, etc. Sensors for chemical variables can also be installed to detect the concentrations or their variations of certain chemical components to help the system to judge and control the duration and degree of cooking. In practice, the above sensors can be installed or placed in the pan, on the turnover/taking-out system, on other mechanical devices, or on other place(s) at which cooked materials can be directly detected.

The temperature of heat transfer media, such as air, steam and pan walls has relation to the duration and degree of cooking. Therefore, some sensors can be installed to detect physical or chemical variables, such as temperature, of heat transfer media to help the control system to precisely judge and control the duration and degree of cooking.

The data detected by above sensors are provided to the control system to judge the duration and degree of cooking and to decide whether to issue orders to corresponding devices to make necessary actions such as starting heating, shutting heating, feeding, turning over cooked materials, taking out cooked materials and so on. On the other hand, the above data serves as feedback data for the control system to dynamically regulate and control the duration and degree of cooking of cooked materials.

Feed-forward sensors to detect environmental temperature, the initial temperature of the cooking-material to be cooked, gas flux, gas pressure and others, and feedback sensors to detect gas flux, pressure, flame temperature, voltage, current, temperature of electrical/ electromagnetic heating, switching state of gas source or electrical heating, etc can be installed to help the control system to control the duration and degree of cooking more rapidly and more precisely and more timely.

Other sensors used to detect motion state of various action units, such as linear displacement, angular displacement, velocity, acceleration, and sensors used to detect working effects such as temperature and smoke, can be installed to help the computer system to more effectively control the motion and working effect of various systems.

### 2. Auto adjusting system for heating intensity

In the present invention, an auto adjusting system for gas heating, electrical heating source, electromagnetic heating and/ or other heating modes in a continuous manner or a multistage manner replaces manual adjusting system.

The gas adjusting refers to regulating and controlling heating intensity through regulating and controlling gas pressure and/or gas flow and/or other quantities. This can be achieved by installing valves for adjusting gas flux or gas pressure between gas source and a burner. The auto adjusting system controlled by the control system may be driven by electric, hydraulic, pneumatic or other types of equipments. AC motor or DC motor can be used for continuous adjusting, and step-motor can be used for multistage adjusting. Sensors for gas pressure, gas flux, linear displacement, angular displacement, flame temperature and so on will provide the control system with feedback data to precisely control gas flux and/ or gas pressure and/or other state parameters.

Other types of adjusting devices can be adopted to regulate heating intensity, such as device for mixing combustion promoter or combustion inhibitor with gas, device for regulating the proportion of gas to air, device for pressurizing or depressurizing, etc.

Electromagnetic valve, other controllable valves or auto lighter can be installed to automatically open and close gas source or to ignite gas. Flame sensor can be installed to detect the burning state or extinguishing state. In case of igniting failure, the auto lighter controlled by the control system will keep igniting till firing. When the flame is extinguished the control system will automatically close electromagnetic valve or other controllable valves or switches to cut down gas source to guarantee safety.

Voltage regulating, current regulating and other forms of adjusting devices controlled by the control systems such as controllable silicon and adjustable resistance are adopted to automatically regulate heating strength of electrical/ electromagnetic, microwave, light-wave and other heating system. Adjusting devices such as analog adjusting devices and digital adjusting devices can be used to adjust heating intensity in a continuous manner or a multistage manner. Sensors for voltage, current, temperature and so on can be installed to provide the computer system with feedback data to precisely regulate and control heating intensity.

### 3. Auto Feeding System

Feeding devices driven by electric, hydraulic, pneumatic or other types of driving units are adopted to perform auto feeding under the control of the control system. The structure of feeding device matches with the packaging form of raw materials, auxiliary (supplementary) materials and semi-finished products.

The container of the cooking-material package can be a case or a bag with single or multiple cells. Different materials are packed in different cells according to feeding sequence and sealed by a film, a cover plate or other sealing materials. There are connectable or fixable parts or components used to connect or fix to an opening device such as a rolling-pulling device or a pushing-pulling device on the film, the cover plate or other sealing materials for opening the package.

An available form to connect or fix a sealing part to an opening device is as follows: there is an extending part or a protruding part on a sealing part to insert into a slot of an opening device, or stick to an opening device. In the extending part there is provided a protuberance, a hole or holes, a groove, a thickened section, a hardened section, a sticky section, a rough section and/or a hook.

Another available form to connect or fix a sealing part to an opening device is as follows: there are holes on an extending part or a protruding part on a sealing part, with which the sealing part can be hung to the dentations or other protuberant component of an opening device.

In the auto feeding device there are one or more rolling-pulling device(s) or pushing-pulling device(s) or mechanical opening devices matching with other sealing forms, equipped with connecting or fixing parts used to connect or fix to connectable or fixable parts on a sealing part of the cooking-material package. The rolling-pulling devices or pushing-pulling device controlled by the control system moves to separate or open the sealing part and the packing part in one time or step by step, letting materials in the package drop into the pan through torn gap in one time or step by step.

For the cooking-material package sealed by a film, the opening device in the auto feeding system can be a rolling-pulling device with a rotating-shaft or a pushing-pulling device with a pushing-pulling rod. The above opening device controlled by the control systems rolls and pulls, or pushes and pulls the film to separate it from the case or the bag in one time or step by step, dropping the cooking-material contained in the case or the bag into the pan in one time or step by step through torn gap.

For the material sealed by a cover plate, the opening devices can be one or more drawing device or a pushing-pulling device with a pushing-pulling rod or other types of device. The above opening device controlled by the control system pushes drawls the cover plate along the sliding groove of the case or the bag, dropping material contained in the case or the bag into the pan in one time or step by step through torn gap.

During a cooking process some liquid materials such as oil, water and soup may be injected into the pan. For example in a "Shao" cooking process, the raw material is always fried first and then stewed after adding some soup or water. The independent or multi-celled oil tank, water tank, soup tank or other tanks are equipped with electromagnetic valves or other controllable valves or switches, and can be installed with a heating device or an attemperator. The computer system controls these tanks to inject oil, water, soup or other liquid materials in certain amount and certain temperature. The pumps controlled by the control system can be installed to quantificationally pump liquid materials to above tanks from the pan or to the pan from the tanks. Cooling system can be installed to cool hot liquid materials before pumping back to tanks or to the discharging system.

The feeding system can be fixed on the proper position above the pan which is suitable for feeding, or on a mechanical device or a mechanical arm, which enables it to move vertically, aslant or agley to a proper position to feed the cooking-material under the control of computer system to meet the requirements of cooking techniques.

The computer system judges the duration and degree of cooking according to the physical and chemical data of the cooked materials detected by the above sensors during a cooking process by executing a software programmed according to cooking techniques. The feeding system moves to proper positions and feeds a kind of or several kinds of materials to be cooked in the pan when it judges that they should be fed, performing this process again and again till the cooking process is completed. Of course, sensors used to detect linear displacement and angular displacement can be installed to help the computer system for exact control.

### 4. Auto turnover/taking-out system for cooked materials

The following turnover modes are adopted in manual cooking process:
Turnover: scoop up, turn over and then put down the cooked materials.

Small tossing: threw up the cooked materials and let them turn over in the air, then fall into the pan, if the pan is in half-ball shape, the height of tossing is less than or equals to the depth of the pan.

Large tossing: threw up the cooked materials and let them turn over in the air, then fall into the pan, if the pan is in half-ball shape, the tossing height is always more than the depth of the pan.

Scattering: stir the cooked materials to scatter them.

It has been proved in practice that the above modes are the most suitable basic turnover modes for various cooking techniques, especially for Chinese cooking techniques.

The turnover device in the present invention comprises a support or a hanger, a The turnover/taking-out actuator and a linker between a turnover/ taking-out actuator and a support or a hanger. The turnover/taking-out actuator is a curved surface body which can turn over and hold cooked materials, and can be made into a net-form similar to strainer. The turnover/taking-out actuator can be integrated with a linker, or installed on a linker with a fixed or adjustable angle, or rotatable to the shaft on the linker. There is a guide rail or a rolling-pulling device or a pushing-pulling device set to a support or a hanger, or other moving devices which enable linker, together with the turnover/taking-out actuator to make rectilinear motion or curvedly motion relative to a support or a hanger. The a support or a hanger is installed on guide rail or other moving device, which enable it to make rectilinear motion, curvedly motion and rotation, the linker and turnover actuator, together with a support or a hanger can make rotation, rectilinear motion or curvedly motion. Sensors for displacement, angular displacement and other types of motion quantities can be installed to help computer system to control motions. By aggregating above rotations with rectilinear motion and curvedly motion in different forms, controlling velocity and acceleration the machine can perform not only the above general basic cooking actions such as t turnover, small or large tossing and scattering but also perform many special actions to meet the requirement by different cooking techniques.

The above turnover/taking-out system can be a kind of flexible structure, which enable this device to move vertically and freely to a regulating position, if the turnover/taking-out interferes with a pan, and enable the turnover/taking-out actuator to adequate itself to pans with different curvature. An adoptable flexible device is pulley mechanism, which control the vertical motion of the turnover/taking-out actuator through pulling the steel ropes. Another available flexible structure is to install a support or a hanger on the base with spring or other flexible devices, and/or divide a support or a hanger into several sections, the linker between sections is flexible.

The link between The turnover/taking-out actuator and linker can be designed to be knock-down, which can give facility to change of different The turnover/taking-out actuators to meet the different cooking requirements.

Some times, one action can't scoop up all materials in the pan, so that a second or more times are needed. To scoop up more effectively, the above a support or a hanger can be installed on rotatable device, or install rotatable device on linker, a support or a hanger, enable The turnover/taking-out actuator to rotate around linker, or rotate together with linker, or place the pan on the supporting device, enable the pan to rotate on the supporting device, and install moving device to drive the pan to rotate. After the first scooping action, the turnover/taking-out actuator or the pan or both rotate by a certain angle for next scooping. The above moving device is driven by electrical, hydraulic or pneumatic drive system controlled by the control system.

One available turnover device is as follows: a scoop is installed on the linker or a pair of linkers. The scoop is installed on the shaft of linker and can rotate around the shaft; or it can be installed on the body of linker by a fixed or adjustable angle. The linker is installed on the shaft of a support or a hanger, the linker can rote round the shaft. The guide rail or rolling-pulling device, or push-or-pull device or other moving device is installed on the a support or a hanger, which enable linker together with The turnover/taking-out actuator to make rectilinear motion or curvedly motion relative to a support or a hanger. A support or a hanger is installed on guide rail or other moving device, which enable it to translate. The linker and the turnover/taking-out actuator can translate together with a support or a hanger.

This device can be used to simulate the actions of cook, realize actions similar to the above turnover actions.

Turnover: The scoop fall down till the edge of scoop nears to inner wall of the pan, linker drives scoop to rotate around the shaft, and move vertically along the a support or a hanger according to the change of curve of the pan, if the pan is flat or small in curvature, the a support or a hanger will translate, scoop up the cooked materials in scoop with a certain angle or along the bottom of the pan, the linker go on rotation and rise up; when the linker exceed proper position after the central vertical line of the pan bottom, the scoop will turn over along the oppose direction of linker movement till the surface of scoop face to the bottom of the pan, the cooked materials falls into the pan, linker and scoop go on moving, or make the opposite motion till they return the initial status before the cooked materials is scooped. So far, one scooping is over. Repeat these motions to perform continuous turnovers.

Small tossing: the action of scooping up is similar to that in turnover except that the linker moves with higher speed, the scoop rotate with higher speed on the opposite direction when the linker near to the upper edge of the pan; the cooked materials in the scoop is thrown out, and turn over in the air, and then fall into the pan, the linker and scoop go on moving or makes opposite motion till they return to the initial status before the cooked materials is scooped up. So far, one small tossing is over. Repeat these motions to perform continuous small tossing;

Large tossing: the scooping up, throwing out and subsequent recovery motions are similar to small tossing. The scoop turns over with higher speed to throw out the cooked materials when the linker nears to or exceeds the upper edge of the pan.

Sometimes, large tossing and small tossing can be replaced with simpler modes: the scoop doesn't make throwing out motion. The scoop turns over when the linker nears or exceeds the upper edge of the pan. The cooked materials turn over and fall into the pan.

Scattering: the scoop rotates round the shaft to the position parallel to the linker, falls down till the edge of the scoop near to inner wall of the pan, the linker rotates round the shaft to a proper position, and then makes the opposite motion. Repeat these motions to scatter and stir the cooked materials.

Another available turnover is as follows: Install a pair of curved surface bodies with the similar shape to the pan on a linker or a pair of linkers, the upper curved surface body can switch. The upper and lower curved surface bodies can combine to form a ellipsoid container, which can rotates round the shaft on the linker. The liner is installed on the shaft of a support or a hanger; the linker can rotate around the shaft on a support or a hanger, the guide rail or roll-and pull or hang-and pull devoice or other devices on a support or a hanger which enable the linker, together with The turnover/taking-out actuator, to make rectilinear motion or curvedly motion relative to a support or a hanger. A support or a hanger is installed on guide rail or other moving device, which enable it to translate. Linker and The turnover/taking-out actuator can translate with a support or a hanger.

The upper curved surface body opens, the lower curved surface body undertakes the fed material, it also can scoop the cooked materials in the pan through the rotation of linker or itself; the upper body closes, the linker fall down till the lower curved surface near to or touch pan bottom, the material is heated in the pan. When the material needs turnover, the similar turnover to the above forms can be realized through linker lifting, ellipsoid and linker rotation round the shaft and upper curved surface body switching. This kind of device gives facility to turnover of large pieces (such as fish), and is especially suitable for frying and dry frying cooking techniques.

A third turnover device is available in the present invention: Install pan or the turnover/taking-out actuator on mechanical arm. Computer system controls the arm to make basic turnover actions such as large tossing, small tossing, turnover, scattering, similar to manual actions. The mechanical arm can be installed on the above mobile a support or a hanger, or a fix base. This kind of turnover/taking-out system can be used independently or jointly with above turnover/taking-out system to perform more complicated turnover operations.

In many cooking techniques, especially Chinese cooking techniques, the cooking process is divided into two or more steps, among which, one or more kinds of cooked materials are needed to taken out of pan and then put in at proper the duration and degree of cooking. For example, the deep frying technique: the first step: primary frying, use lower temperature oil to fry material until it matures, and then take out it with strainer, heat the oil to higher temperature, and then perform the second step: re-frying to make the surface of the material dehydrated and crisp. Additionally, thickening soup with cooking starch is an important content in cooking, and be used in many cooking techniques. Thickening soup with cooking starch has distinguishing of thickening soup-put in material, and put in material-thicken soup, among which, the so called thicken soup-put in material is that: take out cooked materials, and then thicken soup in the pan, finally put in the former cooked materials. In some cooking techniques, for cooking more complicate dishes, the cooked materials may be taken out two or more times.

The requirements of taking-out cooked materials are as follows: taking-out the cooked materials for a while and then put it in the pan later, and taking-out the finished cooked products.

The taking-out action is the operation of scooping or placing the cooked materials into the container, and lifting out the pan. The above materials can be put in the pan again or place in other container in light of requirements. The above turnover/taking-out system can perform these actions, so that they all can serve as taking-out device to separately or jointly perform taking-out/putting in again function.

If two or more similar or different turnover/taking-out systems are needed to equip to one automatic cooking machine, they should be installed on the above guide rail or one or more moving devices which can make rectilinear motion or curvedly motion. Driven by driving unit and controlled by the control system, the turnover/taking-out systems moves along guide rail or make rectilinear motion or curvedly motion, rotation or aggregate motion with above moving devices, the two turnover/taking-out systems can operate independently or jointly to perform the complicate operations, such as two times taking-out, one devices taking-out and the other turns over the cooked materials.

Additionally, one or more containers can be set outside pan, placed near by or above the pan, or installed on moving devices, enable them to move to proper position and undertake the cooked materials dropped by taking-out device. The auto overturning device can be installed to enable container to empty their content into the pan or other containers, its actions are controlled by driving unit controlled by the control system. These containers can store the taken out materials, which will be put in the pan again when necessary; or contain finished dishes or other cooked materials to meet the requirements of continuously cooking or others.

### 5. Control System

The control system in the present invention is a closed loop control system including feedback control and feed-forward control. The control object of the system is the duration and degree of cooking of the cooked materials, the main control quantities are the quantities of the duration and degree of cooking of the cooked materials, i.e., the related physical and chemical status quantities of the cooked materials, as well as supplementary control quantities-the duration and degree of cooking of heat transfer media status quantities, i.e., related physical and chemical status quantities of heat transfer media. The feedback system transfers the detected main and supplementary data of the duration and degree of cooking status quantities and other related quantities which have influence to the duration and degree of cooking, such as data of gas flux, pressure, flame temperature and temperature of electrical or electromagnetic heating source and other feedback data, feed-forward system transfers data of detected environment status quantities and external disturbance quantities and other feed-forward data to computer and other control devices as programmable controller. Computer systems independently or jointly control(s) the duration and degree of cooking of the cooked materials according to the requirements of cooking techniques on the base of feedback and feed-forward signal, using the pre-formulated cooking control software, by the optimal control, fuzzy control, artificial intelligence control or other control modes, through controlling the start an stop of gas and/or electrical heating source/electromagnetic and/or other heating source, and automatically regulating heating strength, modes and the working condition of cooling system in a continuous manner or a multistage manner. When the duration and degree of cooking of cooked materials reached the expected level, the computer or other control auto feeding system feed materials in correct order, control auto turnover and taking-out system to turn over, take out and put in again the cooked materials with the proper mode required by cooking techniques, control switching of pan cover and working condition of other devices, and get the final aim: heating the cooked materials to the expected the duration and degree of cooking required by coking techniques and realizing special flavors.

The control system is equipped with hard disc or other storing devices to store cooking software of different dishes, equipped with keyboard, CD driver or other input devices to input the starting time command and other cooking commands, input and select cooking control software for dishes and foods.

The control system can be connected to Internet or other networks to load cooking control software of dishes and other foods and remotely control automatic cooking machine through network.

Bar code scanner and other identification devices can be installed in the present invention to automatically recognize the sort mark on the packages of materials to be cooked and transfer this information to the control system, the control system loads and executes the corresponding cooking software from storing devices or network according to the reorganization information.

Besides the above systems, the following devices or designs can further be included in the present invention.

### A. Switching device of the pan cover

Pan cover is installed on the auto open/close device, which is driven by electrical, hydraulic or pneumatic driving unit such as controlled by the control systems electromagnetic absorbing system or other driving unit. Computer system determines the switching moment and opening of the pan cover according to the requirements by cooking techniques and data of status of the duration and degree of cooking provided by sensor system, controls pan cover switching system to perform complete switching or part switching at proper duration and degree of cooking required by cooking techniques.

### B. Multi-pan design

Multi-pan deign can be considered to meet requirements by special cooking techniques, for example, independent frying pan, oil pan, soup pan or other pan and more than one set of gas heating devices, electrical or electromagnetic heating devices, and more than one set of adjusting devices for gas heating devices, electrical or electromagnetic heating at the same time. For example, stir-fry with oil cooking technique is divided into three steps: scalding, deep-frying and stir-frying. The material is scaled in boiled water, and then put in oil pan to deep fry, finally put in stir frying pan. The assistant Oil pan and water pan can be set nearby the main stir-frying pan. Layout the three pans along the guide rail of The turnover/taking-out actuator to make The turnover/taking-out actuator move and work among pans. The triangular and other layout forms are available .Install The turnover/taking-out actuator on the above moving device to make it move and work among pans.

### C. Shaking pan and tossing pan design

In some cooking techniques, the cooked materials should be turned over by shaking or tossing pan, or by above small and large tossing, instead of direct turnover. When manually shaken and tossed, the pan makes accelerated or decelerated curvedly motion vertically or horizontally. The pan can be installed on orbit similar to the curve along which shaken or tossed pan runs, controlled by the control system to make accelerated or decelerated motion on the orbit; the pan also can be fixed on mechanical moving device or be placed or installed on the supporting device, which enable it to move on this supporting device, the cam gear or rod driving unit or combined driving unit or other driving unit drives the pan to make curved motions similar to that of shaking and tossing pan in plane or vertical plane, the computer system controls the driving, the speed and acceleration of motion of the mechanical motion driving unit to get the similar effect to that of shaking or tossing pan; or the pan is installed on the mechanical arm, whose action is controlled by the control system to make motions similar to manual shaking or tossing pan.

### D. Continuous cooking design

Continuous cooking refers to continuously cooking two or more dishes or other foods. The following three problems should be settled:
1 □Continuously feed materials
2 0 Take out the finished dishes or other cooked materials and put into other containers;
3□ Discharge the remained oil, water, soup in the pan and wash the pan for the next cooking.

To settle the above problems, the auto feeding system can be designed to place multiple cooking cooking-material packages, with multiple opening actuators matching various packaging. The mechanical or electromagnetic or other types of clutches controlled by the control system connects to feeding driving units to opening devices for various packaging in the cooking order to open packages separately in turn to feed materials separately and continuously, or design the opening operation device and packaging sealing part can automatically connect to each other, the driving unit controlled by the control system drives opening device to move to various cooking-material packages, or drives various cooking-material packages to the opening devices, then connect and open packaging in turn to feed materials continuously and separately.

The problems of taking-out the finished dishes or other cooked materials and putting them into other containers has been settled in the above taking-out device solution.

Electromagnetic valve or other controllable valves or switches are installed on water tap. The computer or other system controls the switching of them to automatically inject water to the pan or wash the pan.

The pan can be installed on the device that can make it translate, rotate or lean, or installed on the mechanical arm. If it is necessary to discharge the oil, water, and soup in the pan, the computer system controls this device or mechanical arm to perform the motion of translating, rotating and leaning, drop the content in the pan into the waste store or treatment devices, below the pan, or pump out the remained liquid from the pan, the above turnover/taking-out system near to the inner wall of the pan to help discharging. In the process of washing the pan, the computer system controls the above water tank or water tap to inject water to the pan, stick The turnover/taking-out actuator to inner wall, making reciprocating motion to clean up the wall, the waste water can be discharge with the above method. Other discharge device can be designed to perform the same task.

### E. Smoke exhausting and treating Design

Place the entire machine or the upper part from the pan edge in closing or semi-closing, open cabinet. The smoke in cooking process is not easy to overflow everywhere. Install smoke exhausting machine in the upper part of the box or connect to smoke exhausting device can get the best smoke exhausting effect. Smoke oil filter or processor can be installed to minimize the air pollution.

Compared with the existing technology, the advantages of the present invention lie in: this automatic cooking machine can realize complete automatic and high quality cooking. The only thing users have to do is to insert the package of raw materials and/or supplementary materials to be cooked and/or semi-finished products into the auto feeding system and start up this automatic cooking machine. The scanner of the auto feeding system automatically recognizes the identification signal and transfers this identification information to the control system, and the control system loads the corresponding cooking software to control the sensor system to detect and transfer signal back to the control system. The control system controls the working condition of the auto adjusting system for gas and/or electrical/electromagnetic and/or other heating system, the auto feeding system, the auto turnover system for cooked materials, the auto taking-out system for cooked materials and other systems. The whole cooking process, from inflaming and feeding materials to finishing cooking and taking-out finished product, is performed automatically. Because this automatic cooking machine can automatically and correctly control the duration and degree of cooking, and can perform many cooking techniques, especially those Chinese cooking techniques, this automatic cooking machine can not only automatically cook but also make high and stable quality dishes and other foods with various special flavors.

The followings are further illustration combined with attached drawings and concrete implementation forms.

### Brief Description of the Drawing

Fig 1 is a schematic front view of an automatic cooking machine according to one embodiment of the present invention.
Fig 2 is a schematic cutaway view of an auto adjusting system for gas flux according to one embodiment of the present invention.
Fig 3 is a schematic cutaway view of an auto adjusting system for gas flux according to another embodiment of the present invention.
Fig 4 is a schematic side view of a cooking-material package according to one embodiment of the present invention.
Fig 5 is a top view of Fig 4.
Fig 6 is a schematic side view of an auto feeding system according to one embodiment of the present invention.
Fig 7 is a top view of Fig 6.
Fig 8 is a schematic side view of a cooking-material package according to another embodiment of the present invention.
Fig 9 is a top view of Fig 8.
Fig 10 is a schematic side view of an auto feeding system according to another embodiment of the present invention.
Fig 11 is a top view of Fig 10.
Dig 12 is a schematic front view of an auto turnover/taking-out system according to one embodiment of the present invention.
Fig 13 is a top view of Fig 12.
Fig 14 is a schematic front view of an auto turnover/taking-out system according to another embodiment of the present invention.
Fig 15 is a side view of Fig 14.
Fig 16 is a schematic top view of an auto turnover/taking-out system when moving along the pan.
Fig 17 is a schematic view of an auto turnover/taking-out system with a flexible structure.
Fig 18 is a schematic front view of an automatic cooking machine according to another embodiment of the present invention.

### Modes of Embodiments

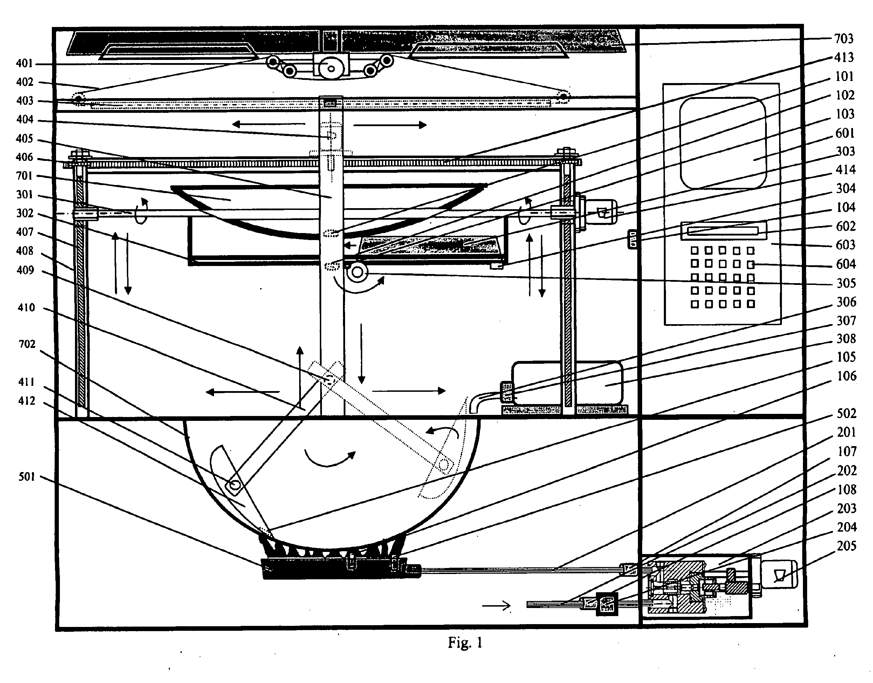

The automatic cooking machine shown in Fig 1 comprises a pan, a sensor system, an auto adjusting system for gas heating or electrical/electromagnetic heating, an auto feeding system, an auto turnover/taking-out system for cooked materials, and a computer system or other control system.

Sensor 101,102 are non-contacting sensors. Sensor 102 is installed on the support of the auto feeding system and sensor 101 is installed on the pan cover. They separately detect the temperature and other parameters of cooked materials in the pan when the pan cover is close or open and provide the computer system with feedback data. Sensor 105 is a contacting sensor which is installed on the edge of the scoop of the turnover/taking-out system to detect the temperature and other parameters of the cooked materials in the pan and also provides the computer system with feedback data. Sensor 107 provides the computer system with feedback data on gas flux and pressure. Sensor 106 provides the computer system with feedback data on flame temperature and monitors the burning or extinguishing state of flame. Sensor 103 is installed on the outlet of the auto feeding system to provide the computer system with feed-forward data such as the initial temperature of the cooking-material to be cooked. Sensor 104 provides the computer system with feed-forward data such as the environmental temperature. Sensor 108 provides the computer system with feed-forward data such as the flux and pressure of gas source. Of cause, other types of sensors and sensor configuration can be used at the present invention.

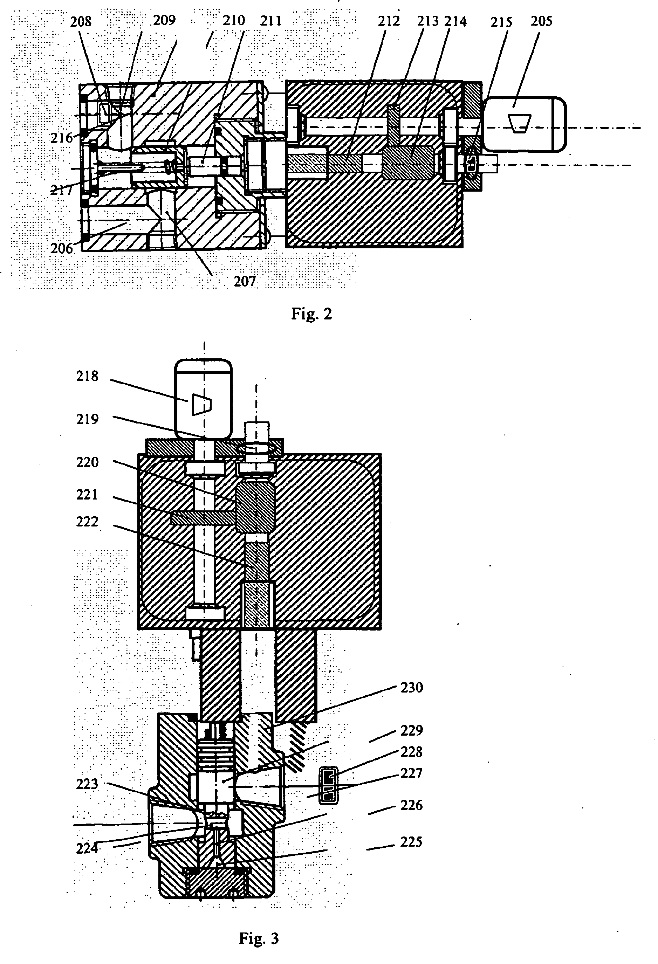

The auto adjusting system for gas heating or electrical/electromagnetic heating can be an auto adjusting devices for controlling gas flux, as shown in Fig 2. The gas flows into the system via inlet 206, passing through channel 207, a throttling gap on valve core 210 and channel 209, and flows out of the system via outlet 216. The motor 205 drives shaft 212 to spin in or out by gears 213 and 214, pushing valve core 210 in axial direction via pushing-rod 211 to change the flux area section and thus to adjust the gas flux. Pushed by spring 217, valve core 210 always abut against pushing-rod 211. Sensor 215 detects linear displacement and angular displacement of shaft 212, and sensor 208 detects the gas flux of the outlet to provide the computer system with feedback data to precisely control the gas flux .

The auto adjusting system for gas heating or electrical/electromagnetic heating can also be an auto adjusting device for control gas pressure, as shown in Fig 3. The gas flows into the system via inlet 223, passing through radial hole 224 on valve core 229 and axial hole 226, enters sensitive cave 225 under the valve core, and generates thrust force upward upon the valve core. If no gas enters sensitive cave 225 or the gas pressure is lower when at the beginning, the thrust force is not large enough to overcome the acting force of spring 230, so that the valve core is at the lowest position, cutting off the inlet 223 and outlet 227 and shutting down the valve. The pressure at inlet gets higher and higher with the gas fluxing in, the pressure in cave 225 becomes higher and higher too. When the gas pressure of 225 become higher than the acting force of spring 223, the valve core 229 is lifted up and stops at a balance position. In this case, the inlet 223 and outlet 227 are open and the gas flows out from outlet 227. The pressure in cave 225 no longer becomes high and keeps balance with acting fore of spring 230. Motor 218 drives shaft 222 to spin in and out along axial direction through gear 220 and 221 to change the pre-tightening force of spring 230, and thus adjusts the pressure used to lift up the valve core. Sensor 219 detects linear displacement and angular displacement of shaft 222, and sensor 228 detects the gas pressure of the outlet to provide the computer system with feedback data to precisely control the gas pressure.

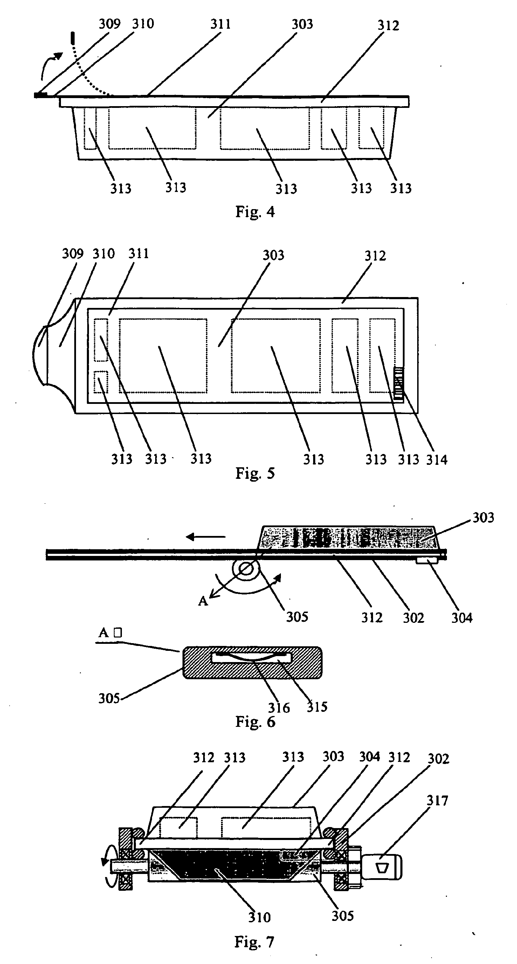

Fig 4 and 5 show a form of the cooking-material package. Raw materials, supplementary or auxiliary materials and semi-finished products are packed in different cells 313 of plastic case 303 according to the feeding sequence when they are put into the pan. The upper part of plastic case 303 is sealed by plastic film 311 through hot pressing. There is a extending tongue 310 on the front part of the hot pressed plastic film 311, on which there is a protrusion 309 in form of band. Fig 6 and 7 show the auto feeding system matched with this kind of package. When using, put the protrusion 312 formed on the edge of the plastic case into groove 302, enabling it to slide along the groove. Insert the tongue 310 into slot 315 in shaft 305 and make spring 316 clip protrusion 309. Code bar scanner 304 automatically scans the identification bar 314 and provides the recognition information with the computer system. The computer system loads and executes the corresponding cooking software from its memory or from Network. When the feeding system is operated, motor 317 controlled by the computer system drives rotating-shaft 305 to rotate and thus to separate hot pressed film 311 from the body of plastic case 303. The body of the case slides forward and the cooking-material contained in the case drops into the pan under the case. The computer system controls rotating-shaft 305 to stop at proper position and the separation between hot pressed plastic film 311 and case 303 stops at the edge of cells 313, which enables only the needed material to drop into the pan at proper moment. Of course, sensors used to detect linear displacement and angular displacement can be installed to help the computer system for exact control.

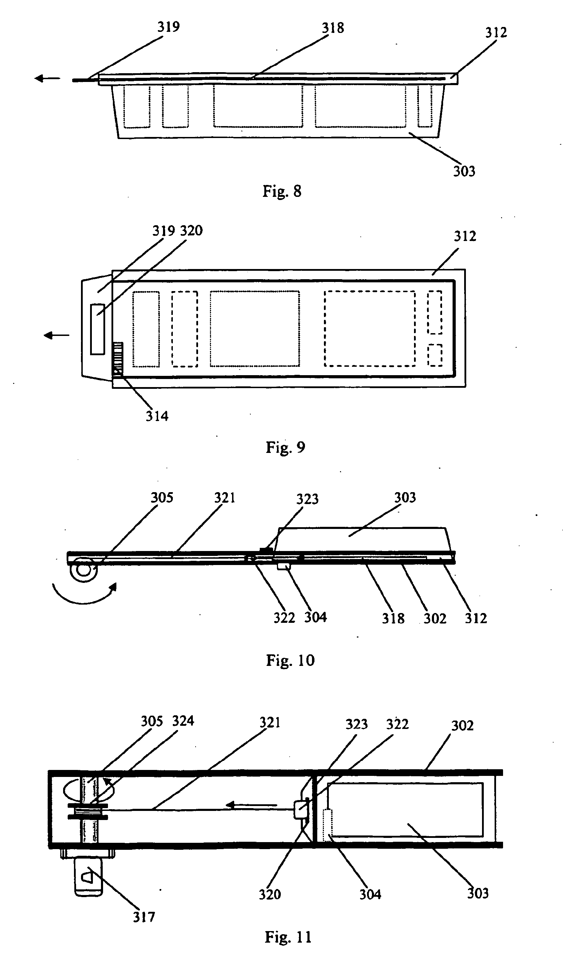

Fig 8 and 9 show another form of the cooking-material package. The raw materials, supplementary materials and semi-finished products are packed in different cells of plastic case 303 according to the feeding sequence when they are put into the pan. The upper part of plastic case is sealed with a pushing-pulling plate cover 318. There is an extending tongue 319 on the front part of the cover and there is/are long hole(s) 320 on the tongue. Fig 10 and 11 show the auto feeding system matched with this kind of package. When using, put the protrusion 312 formed on the edge of the plastic case into groove 302. Connect 320 with hook 322 on soft steel rope 321. Bar code scanner 304 automatically scans the identification bar 314 on the packaging case and provides the recognition information with the computer system. The computer system loads and executes the corresponding cooking software from its memory or from Network. When the feeding system is operated, motor 317 controlled by the computer system drives rotating-shaft 305 to rotate and thus to make the winding device 324 roll the soft steel rope 321. Stopper 323 stops the movement of plastic case 303 with the pushing-pulling plate cover 318 sliding forward and thus separate 318 from the plastic case 303. The materials contained in the case drops into the pan. The computer system controls rotating-shaft 305 to stop at proper position and the separation between 318 and 303 stops at the edge of cells 313, which enables only the needed material to drop into the pan at proper moment. Of course, sensors used to detect linear displacement and angular displacement can be installed to help the computer system for exact control.

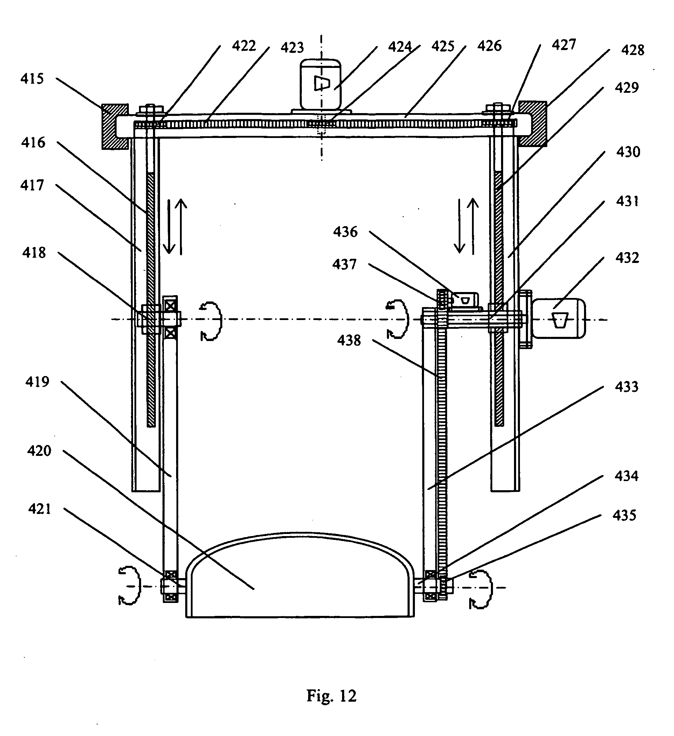

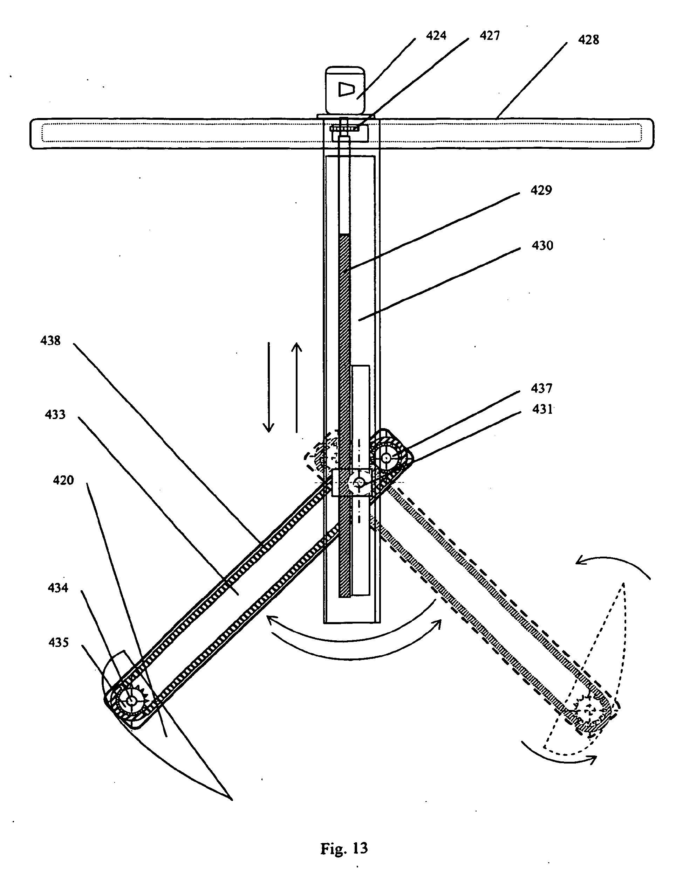

Fig 12 and 13 show a form of turnover/taking-out system. The turnover/taking-out actuator 420 is a scoop-shaped device with one side as its inlet and the other three sides as walls in the shape of bevel surface or curved surface. The bottom surface of 420 is a curved surface similar to the shape of the pan bottom. This device is fixed on rotating-shaft 421 and 434. Motor 436 drives rotating-shafts 421 and 434, together with scoop 420, to rotate through gear 437, chain 438 and gear 435. Motor 432 drives rotating-shafts 431 and 418, together with linkers 419, 433 and scoop 420, to rotate. Motor 424 drives rotating-shafts 431 and 418, together with linkers 419, 433 and scoop 420, to move vertically along supports 417 and 430 through gears 425, 422, 427, chain 423, and guide screws 416 and 429. Crossbeam 426 of the supports moves along sliding grooves (not shown) of a pair of sliding rails 415 and 428, which can move the whole turnover/taking system out of or into the pan. The computer system controls this system to complete actions such as turnover, small tossing, large tossing, stirring, taking-out, taking-in, re-feeding, etc according to the requirements of cooking techniques. Of course, sensors used to detect linear displacement and angular displacement can be installed to help the computer system for exact control.

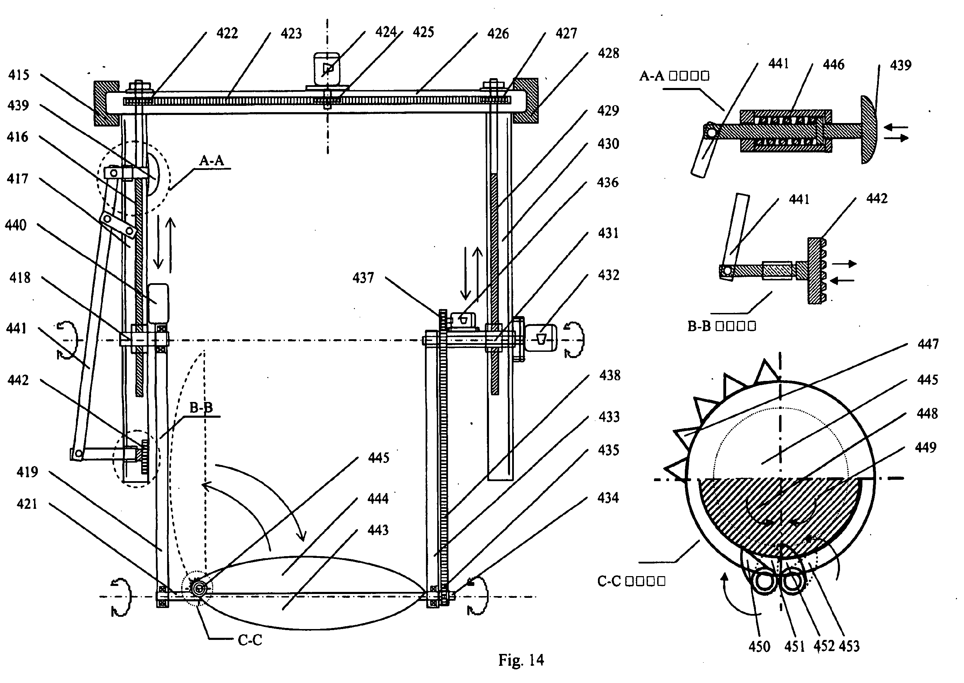

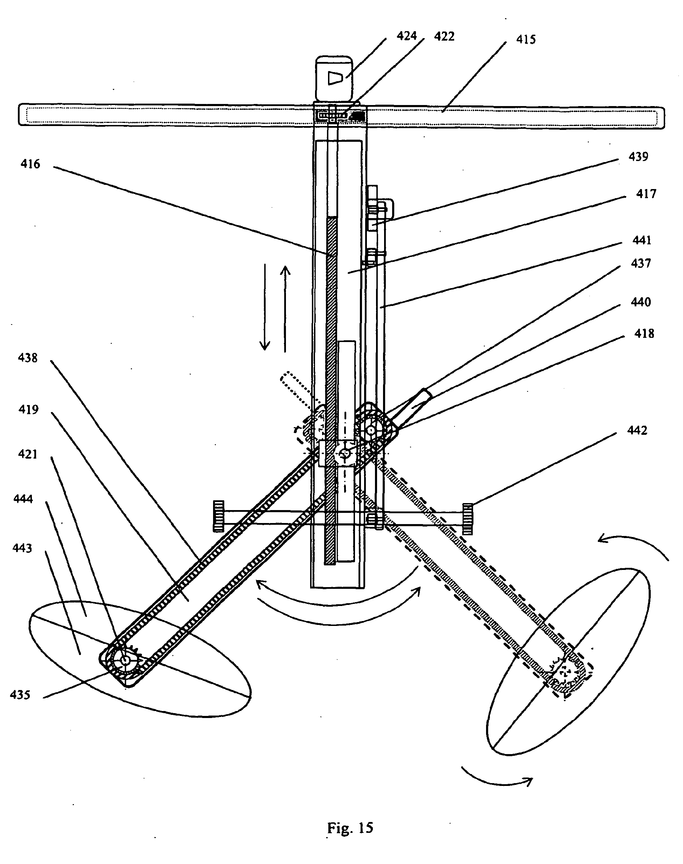

Fig14 and 15 show another form of turnover/taking-out system. The upper curved surface body 444 and the lower curved surface body 443 combine to form an ellipsoid container fixed on rotating-shafts 421 and 434 with its top surface and bottom surface similar to the pan bottom. Motor 436 drives rotating-shafts 421 and 434, together with the ellipsoid container, to rotate through gear 437, chain 438 and gear 435. Motor 432 drives rotating-shafts 431 and 418, together with linkers 419, 433 and the ellipsoid container, to rotate. Motor 424 drives rotating-shafts 431 and 418, together with linkers 419, 433 and the ellipsoid container, to move along supports 417 and 430 vertically through gears 425, 422, 427, chain 423 and guide screws 416 and 429. Crossbeam 426 of the supports moves along sliding grooves (not shown) of a pair of sliding rails 415 and 428, which can move the whole turnover/taking system out of or into the pan. When linkers 419 and 433, which are kept vertical, and the ellipsoid container, which is kept horizontal, rise along supports 417 and 430 until the protrusion 440 touches the half-moon 439, the half-moon 439 is depressed to retract. Rack 442 extends forward through linkage mechanism 441, joggling with gear 447 of the linking shaft of the upper and lower curved surface body. Shaft 445 rotates by 90°, and the curved surface body 444 is opened. When linkers 419 and 433 continues to rise until the protrusion 440 leaves from half-moon 439, spring 446 makes half-moon 439 back to its original position. Rack 442 retracts, departing from gear 447. At this time the protuberance 448 on shaft 445 has rotated 90° to a position shown by 449. Ratchet wheel 450 rotates to a position shown by 451 to block the edge of the protuberance 448 from returning. The upper curved surface body remains open. When linkers 419 and 433 fall down, the same actions are repeated but in a reverse procedure. The upper curved surface closes; ratchet wheel 453 rotates to a position shown by 452 to keep the upper curved surface body closed. When the upper curved surface is not intended to open or close, linkers 419 and 433 can be departed a certain angle from the vertical direction to avoid the contacting of protuberance 440 and half-moon 439 and thus to keep the initial state of the upper curved surface body. The computer system controls this system to complete actions such as turnover, small tossing, large tossing, stirring, taking-out, taking-in, re-feeding, etc according to the requirements of cooking techniques. Of course, sensors used to detect linear displacement and angular displacement can be installed to help the computer system for exact control.

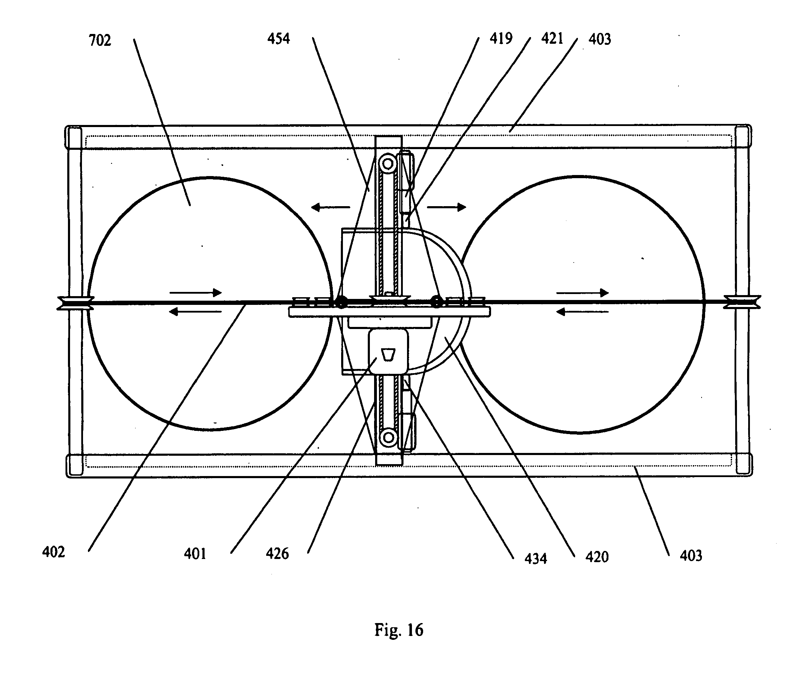

As shown in Fig 16, the turnover/taking-out system is installed on the sliding guide rails 403. Motor 401 draws soft steel rope 402 to pull the tripod 454 fixed on the crossbeam 426 of the supports of the turnover/taking-out system and thus drives the turnover/taking-out system to make horizontal movement along the above guide rails to complete the actions of moving out of and into the pain or moving from one pan to another. The multiple-pan design can adopt the same mode.

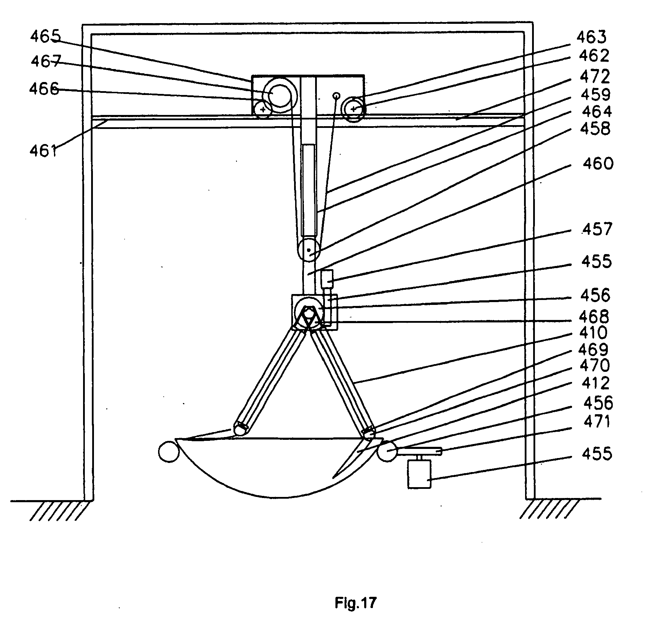

Fig 17 shows a turnover/tasking-out system with a flexible structure. Motor 468 drives scoop 412 to rotate around a rotating-shaft of linker 410 through tapering gears 469 and 470. Motor 457 drives linker 410, together with scoop 412, to rotate around a shaft on inner sleeve 460. Motor 466 drives reel wheel 467 to reel or release sling rope 459 and thus drives pulley 458 on inner sleeve 460 to move vertically; linker 410 and scoop 412, together with inner sleeve 460, move vertically along outer sleeve 464. Motor 463 drives gear 462 on hanger 465 to rotate and thus drives hanger 465, together with the inner and outer sleeves, the linker and the scoop, to move along the guide rail 461. The combination of the above movements can realize the turnover action and the taking-out action for the cooked materials. If the scoop interferes with the pan, this turnover/taking-out system with a flexible structure will rise wholly and freely to avoid the damage caused by collision between the pan and the scoop and can adapt the scoop to pans with different curved surfaces. Motor 455 drives pan 702 to rotate through gears 471 and 456 and thus change the scooping position with a better effect.

Please refer back to Fig 1. When cooking with the automatic cooking machine of the present invention, insert the cooking-material package into sliding groove 302, with hot pressed film 311 facing downwards. Insert the tongue to the slot on rotating-shaft 305. Bar code scanner304 scans identification bar 314 on cooking-material package 303 and acquires the information for the control system. The control system loads and executes the corresponding cooking software from its memory or network. When cooking begins, the control system issues order to open electromagnetic valve 204, letting gas flow into auto adjusting system 203 through inlet pipe 202 and electromagnetic valve 204. The control system controls the gas flux through controlling the rotation of motor 205 according to the feed-forward data provides by sensors 104 and 108. The gas flows into burning base 501 from outlet pipe 201 and the auto lighter ignites the gas. Then the control system controls the gas flux and the working state of various other systems according to the feed-forward data provided by sensors 103,104 and 108, and the feedback data provided by sensors 101, 102, 105, 106 and 107. When feeding the cooking-material, a motor drives rotating-shaft 305 to rotate and rolls hot pressed film 311 to separate from packing case 303, the cooking-material drops into the pan 702 from the torn gap. The insulated container 308, which can be heated, has three cells storing oil, soup and water respectively. A tri-path electromagnetic valve 307 controls individually the switches of the oil cell, the soup cell and the water cell. Oil, water and soup can be separately injected into the pan through a tee pipeline 306. Groove 302 and pan cover 701 is installed on rotating-shaft 301. As shown in the figure, in process of feeding, the auto feeding system is at the lower position below the pan cover. When covering the pan, motor 414 drives rotating-shaft 301 to rotate and thus drives the pan cover to turn down. Motor 404 drives rotating-shaft 301 to move down along support 408 through chain 413, gear 406 and guide screw 407, sending the auto feeding system to the most proper feeding position or covering the pan cover. When the feeding process is finished or the cover needs to be opened, rotating-shaft 301 moves upward to make working space for the turnover/taking-out system. Scoop 412, controlled by the control system as above, performs the turnover action and the taking-out action under the requirements of cooking techniques through combined movements of rotating around rotating-shaft 411, rotating around rotating-shaft 409 together with linker 410 and moving along support 405 vertically. If the turnover/taking-out system is needed to move into or out of the pan, motor 401 will drive support 405 to move along sliding guide rail 403. 603 is the panel of the control system. 602 is a CD diver, 604 is a keyboard, 601 is a display, and 703 is a smoke exhauster.

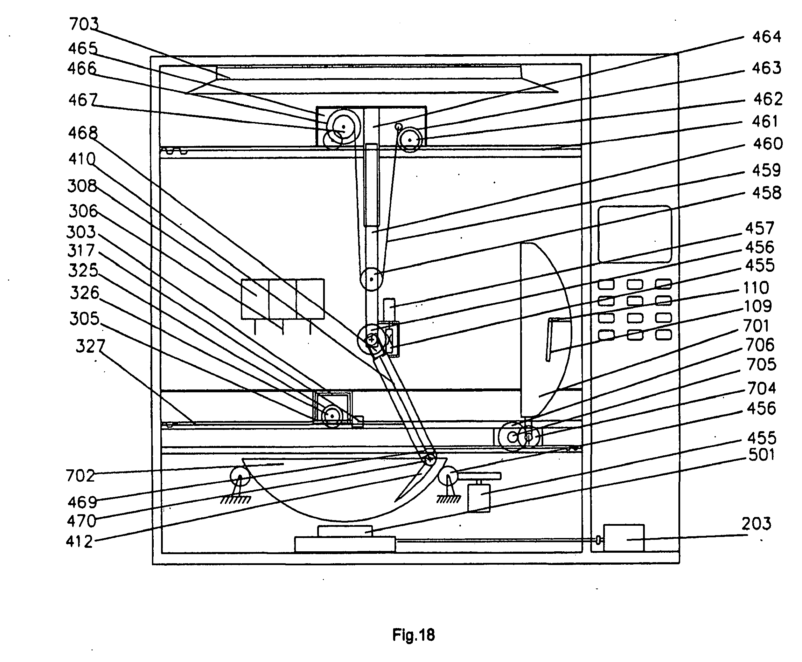

Fig 18 shows another embodiment of the present invention. 203 is an auto adjusting system for gas heating, 501 is gas burning base, and 703 is a smoke exhauster. The dentations on feeding reel 305 are inserted into the holes on sealing film 311 on packing case 303. Motor 317 drives rotating-shaft 305 to rotate, rolling and pulling hot pressed film and thus separating it from packing case 303, with the cooking-material dropping into the pan 702 from the torn gap. Motor 325 drives gear 326 to rotate, driving the auto feeding system together with packing case 303 to move along guide rail 327, and thus sending the auto feeding system to the most proper position for feeding. The insulated container 308 has three cells storing oil, soup and water respectively. Oil, water and soup can separately be injected into the pan through tee pipeline 306. Motor 468 drives scoop 412 to rotate around the rotating-shaft on linker 410 through tapering gears 469 and 470. Motor 457 drives a shaft to rotate around inner sleeve 460 through worm wheel 456 and worm 470. Motor 466 drives reel wheel 467 to roll and release steel rope 459 and thus to drive pulley 458 on inner sleeve 460 to move vertically. Motor 463 drives gear 462 on hanger 465 to rotate, having hanger 465, together with the inner and outer sleeves, the linker and the scoop ,to move along guide rail 461. The turnover action and the taking-out action can be performed under the requirements of cooking techniques through combined movements. Motor 455 drives pan 702 to rotate through gear 456, changing the scooping position. Motor 706 drives pan cover 701 to rotate to be opened or closed through gears 705 and 704. The pan cover can be moved besides the pan along the guide rail. Sensor 109 is installed on flexible joint 110 and moves to the detecting position automatically when the pan cover is closed.

## Claims

1. An automatic cooking machine comprising a pan (702), an auto feeding system, an auto turnover system for the cooked materials, a heating system and a control system, wherein said automatic cooking machine further includes a sensor system and an auto adjusting system for heating intensity, said sensor system includes at least one or more sensors (101, 102, 105) used to detect the duration and degree of cooking by detecting the temperature of the cooked materials in the pan (702), said control system is used to control said auto feeding system, said auto turnover system for the cooked materials, said heating system and said auto adjusting system for heating intensity to automatically feed cooking-materials, turn over and take out cooked materials, and regulate heating intensity at the proper moment, and said control system automatically determines the proper duration and degree of cooking of the cooked materials according to the values and the variations of the physical variables and/or the chemical variables detected by the sensor(s) used to detect the duration and degree of cooking in said sensor system under the requirements of cooking techniques.

2. The automatic cooking machine according to claim 1, wherein said automatic cooking machine further includes an auto taking-out system for the cooked materials, and said auto taking-out system is independent of said auto turning-over system for the cooked materials or integrated with said auto turning-over system to form an auto turning-over/taking-out system.

3. The automatic cooking machine according to claim 1, wherein said sensor system further includes movement detecting devices, and said control system automatically controls a driving unit and/or a transmission mechanism and/or other moving unit according to the values and the variations of the physical variables detected by said movement detecting device and wherein said movement detecting device comprises one or more sensors used to detect motion parameters.

4. The automatic cooking machine according to claim 1, wherein said auto adjusting system for heating intensity includes an auto adjusting device for gas flux, electrical power, electromagnetic power and/or other heating intensity under the control of said control system.

5. The automatic cooking machine according to claim 1, wherein said control system stores various control applications for various cooked materials and controls the duration and degree of cooking of the cooked materials and other cooking operations of said automatic cooking machine according to the sorts of the cooked materials under the requirements of cooking techniques.

6. The automatic cooking machine according to claim 1, wherein the whole body of said automatic cooking machine or its upper part from the edge of the pan is placed in a closing or semi-closing, transparent or nontransparent cabinet, and said cabinet is connected to smoke exhausting and/or treatment device or said cabinet comprises a smoke exhausting and/or treatment device.

7. The automatic cooking machine according to claim 1, wherein said automatic cooking machine further includes code bar scanner and/or other identification device which automatically collects the information on a cooking-material package and transfers that information to said control system.

8. The automatic cooking machine according to claim 1, wherein said auto feeding system includes one or more opening devices to open one or more cooking-material packages, a linking unit to link with the connectable or fixable part on said cooking-material package(s), and a driving mechanism controlled by said control system, said driving mechanism drives said opening device(s) and/or said cooking-material package(s) and draws the sealing part and/or the packaging part of said cooking-material package(s) to open or to separate with each other in one time or step by step, and said auto feeding system thus feeds the cooking materials to said pan in one time or step by step through a gap torn on said package(s).

9. The automatic cooking machine according to claim 1 or 2, wherein said auto turnover/taking-out system for cooked materials includes a support, a The turnover/taking-out actuator, a linker between said The turnover/taking-out actuator and said support, and a driving part, and said driving part accepts the operation order from said control system and drives said support and/or said The turnover/taking-out actuator and/or said linker.

10. The automatic cooking machine according to claim 9, wherein said auto turnover/taking-out system is a flexible structure which automatically makes relative displacement among its inner components to avoid collision when encountering foreign bodies.

## Patentansprüche

1. Garautomat mit einem Topf (702), einem automatischen Zufuhrsystem, einem automatischen System zum Wenden der gegarten Materialien, einem Heizsystem und einem Steuersystem, wobei der Garautomat ferner ein Sensorsystem und automatisches System zum Verstellen der Heizintensität aufweist, wobei das Sensorsystem mindestens einen oder mehrere Sensoren (101, 102, 105) aufweist, die zum Erfassen der Gardauer und des Gargrads verwendet werden, indem sie die Temperatur der gegarten Materialien im Topf (702) erfassen, wobei das Steuersystem dazu verwendet wird, das automatische Zufuhrsystem, das automatische System zum Wenden der gegarten Materialien, das Heizsystem und das automatische System zum Verstellen der Heizintensität so zu steuern, dass Garmaterialien automatisch zugeführt werden, gegarte Materialien gewendet und herausgenommen werden und die Heizintensität zum richtigen Zeitpunkt reguliert wird, wobei das Steuersystem automatisch die richtige Gardauer und den richtigen Gargrad der gegarten Materialien gemäß den Werten und den Variationen in den physikalischen Variablen und/oder den chemischen Variablen bestimmt, die von dem/den Sensor/en erfasst werden, der/die zur Erfassung der Gardauer und des Gargrads in dem Sensorsystem gemäß den Gartechnikanforderungen verwendet wird/werden.

2. Garautomat nach Anspruch 1, wobei der Garautomat ferner ein automatisches System zum Herausnehmen der gegarten Materialien aufweist, wobei das automatische Herausnahmesystem von dem automatischen System zum Wenden der gegarten Materialien unabhängig ist oder mit diesem zu einem automatischen Wende-/Herausnahmesystem integriert ist.

3. Garautomat nach Anspruch 1, wobei das Sensorsystem ferner Bewegungserfassungsvorrichtungen aufweist und das Steuersystem automatisch eine Antriebseinheit und/oder einen Übertragungsmechanismus und/oder eine andere bewegende Einheit gemäß den Werten und den Variationen in den physikalischen Variablen, die von der Bewegungserfassungsvorrichtung erfasst werden, steuert und wobei die Bewegungserfassungsvorrichtung einen oder mehrere Sensoren umfasst, die zur Erfassung von Bewegungsparametern verwendet werden.

4. Garautomat nach Anspruch 1, wobei das automatische System zum Verstellen der Heizintensität eine automatische Vorrichtung zum Verstellen der Gasströmung, der elektrischen Leistung, der elektromagnetischen Leistung und/oder einer anderen Heizintensität unter der Steuerung des Steuersystems aufweist.

5. Garautomat nach Anspruch 1, wobei das Steuersystem verschiedene Steueranwendungen für verschiedene gegarte Materialien speichert und die Gardauer und den Gargrad der gegarten Materialien sowie andere Garvorgänge des Garautomaten nach den Arten der gegarten Materialien gemäß den Gartechnikanforderungen steuert.

6. Garautomat nach Anspruch 1, wobei der ganze Körper des Garautomaten oder sein oberer Teil ab dem Rand des Topfs in einem geschlossenen oder halb geschlossenen transparenten oder nicht transparenten Schrank platziert ist und der Schrank mit einer Rauchabzugs- und/oder -behandlungsvorrichtung verbunden ist oder der Schrank eine Rauchabzugs- und/oder -behandlungsvorrichtung umfasst.

7. Garautomat nach Anspruch 1, wobei der Garautomat ferner eine Strichcodelesevorrichtung und/oder eine andere Identifizierungsvorrichtung aufweist, die die Informationen auf einer Garmaterialpackung automatisch sammelt und diese Informationen zum Steuersystem übermittelt.

8. Garautomat nach Anspruch 1, wobei das automatische Zufuhrsystem eine oder mehrere Öffnungsvorrichtungen zum Öffnen einer oder mehrerer Garmaterialpackungen, eine Verbindungseinheit zur Verbindung mit dem verbindbaren oder festlegbaren Teil an der/den Garmaterialpackung/en und einen von dem Steuersystem gesteuerten Antriebsmechanismus aufweist, der die Öffnungsvorrichtung/en und/oder Garmaterialpackung/en antreibt und an dem Abdichtungsteil und/oder dem Verpackungsteil der Garmaterialpackung/en zieht, um auf einmal oder schrittweise einen Öffnungs- oder Trennvorgang durchzuführen, wobei das automatische Zufuhrsystem somit die Garmaterialien dem Topf auf einmal oder schrittweise durch einen in die Packung/en gerissenen Spalt zuführt.

9. Garautomat nach Anspruch 1 oder 2, wobei das automatische System zum Wenden/Herausnehmen von gegarten Materialien eine Stütze, ein Wende-/Herausnahmestellglied, einen Verbinder zwischen dem Wende-/Herausnahmestellglied und der Stütze und ein Antriebsteil aufweist, das den Betriebsbefehl vom Steuersystem annimmt und die Stütze und/oder das Wende-/Herausnahmestellglied und/oder den Verbinder antreibt.

10. Garautomat nach Anspruch 9, wobei das automatische Wende-/Herausnahmesystem eine flexible Struktur ist, die automatisch Relativverschiebungen unter ihren inneren Komponenten vornimmt, um beim Zusammentreffen mit Fremdkörpern Zusammenstöße zu vermeiden.

## Revendications

1. Appareil de cuisson automatique comprenant un pot (702), un système d'alimentation automatique, un système de retournement automatique pour les substances cuites, un système de chauffage et un système de contrôle, ledit appareil de cuisson automatique comportant en outre un système de capteur et un système d'ajustement automatique pour l'intensité du chauffage, ledit système de capteur comportant au moins un ou plusieurs capteurs (101, 102, 105) utilisés pour détecter la durée et le degré de cuisson en détectant la température des substances cuites dans le pot (702), ledit système de contrôle étant utilisé pour contrôler ledit système d'alimentation automatique, ledit système de retournement automatique pour les substances cuites, ledit système de chauffage et ledit système d'ajustement automatique pour l'intensité de chauffage pour alimenter automatiquement des substances à cuire, les retourner et sortir les substances cuites, et pour réguler l'intensité de chauffage au moment opportun, et ledit système de contrôle déterminant automatiquement la durée et le degré de cuisson appropriés des substances cuites en fonction des valeurs et des variations des variables physiques et/ou des variables chimiques détectées par le ou les capteurs utilisés pour détecter la durée et le degré de cuisson dans ledit système de capteur en fonction des exigences des techniques de cuisson.

2. Appareil de cuisson automatique selon la revendication 1, dans lequel ledit appareil de cuisson automatique comporte en outre un système de sortie automatique pour les substances cuites, et ledit système de sortie automatique est indépendant dudit système de retournement automatique pour les substances cuites ou intégré avec ledit système de retournement automatique pour former un système automatique de retournement et de sortie.

3. Appareil de cuisson automatique selon la revendication 1, dans lequel ledit système de capteur comporte en outre des dispositifs de détection de mouvement, et ledit système de contrôle contrôle automatiquement une unité d'entraînement et/ou un mécanisme de transmission et/ou une autre unité de mouvement en fonction des valeurs et des variations des variables physiques détectées par ledit dispositif de détection de mouvement et ledit dispositif de détection de mouvement comprend un ou plusieurs capteurs utilisés pour détecter des paramètres de mouvement.

4. Appareil de cuisson automatique selon la revendication 1, dans lequel ledit système d'ajustement automatique pour l'intensité du chauffage comporte un dispositif d'ajustement automatique du flux de gaz, de la puissance électrique, de la puissance électromagnétique et/ou d'une autre intensité de chauffage sous le contrôle dudit système de contrôle.

5. Appareil de cuisson automatique selon la revendication 1, dans lequel ledit système de contrôle mémorise différentes applications de contrôle pour différentes substances cuites et contrôle la durée et le degré de cuisson des substances cuites et d'autres opérations de cuisson dudit appareil de cuisson automatique en fonction des types de substances cuites en fonction des exigences des techniques de cuisson.

6. Appareil de cuisson automatique selon la revendication 1, dans lequel l'ensemble du corps dudit appareil de cuisson automatique ou sa partie supérieure depuis le bord du pot est placé dans une enceinte fermée ou semi-fermée, transparente ou non, et ladite enceinte est connectée à un dispositif d'échappement de la fumée et/ou de traitement de la fumée ou ladite enceinte comprend un dispositif d'échappement de la fumée et/ou de traitement de la fumée.

7. Appareil de cuisson automatique selon la revendication 1, dans lequel ledit appareil de cuisson automatique comporte en outre un lecteur de code à barre et/ou un autre dispositif d'identification qui recueille automatiquement les informations sur un emballage d'une substance à cuire et qui transfère ces informations audit système de contrôle.

8. Appareil de cuisson automatique selon la revendication 1, dans lequel ledit système d'alimentation automatique comporte un ou plusieurs dispositifs d'ouverture pour ouvrir un ou plusieurs emballages de substance à cuire, une unité de liaison pour la liaison avec la partie à connecter ou à fixer sur ledit ou lesdits emballages de substance à cuire, et un mécanisme d'entraînement contrôlé par ledit système de contrôle, ledit mécanisme d'entraînement entraînant ledit ou lesdits dispositifs d'ouverture et/ou ledit ou lesdits emballages de substance à cuire, et retirant la partie de scellage et/ou la partie d'emballage dudit ou desdits emballages de substance à cuire pour les ouvrir ou les séparer les unes des autres en une fois ou au fur et à mesure, et ledit système d'alimentation automatique alimentant ainsi les substances à cuire audit pot en une fois ou au fur et à mesure, par une ouverture déchirée sur ledit ou lesdits emballages.

9. Appareil de cuisson automatique selon la revendication 1 ou 2, dans lequel ledit système de retournement et de sortie automatique pour les substances cuites comporte un support, un actionneur de retournement et de sortie, un dispositif de liaison entre ledit actionneur de retournement et de sortie et ledit support, et une partie d'entraînement, et ladite partie d'entraînement accepte l'ordre de fonctionnement dudit système de contrôle et entraîne ledit support et/ou ledit actionneur de retournement et de sortie et/ou ledit dispositif de liaison.

10. Appareil de cuisson automatique selon la revendication 9, dans lequel ledit système de retournement et de sortie automatique est une structure flexible qui effectue automatiquement un déplacement relatif de ses composants internes pour éviter une collision lorsqu'il rencontre des corps étrangers.
